# EUROPEAN PATENT SPECIFICATION

(11) **EP 2 253 125 B1**
(45) Date of publication and mention of the grant of the patent: **11.03.2015**
(21) Application number: 08807633.6
(22) Date of filing: 12.09.2008
(51) Int. Cl.: H04M 1/725, G06F 17/30, H04M 1/2745

(54) **METHOD, CELLULAR WIRELESS HANDSET AND SERVER FOR PROVIDING UNIVERSAL RESOURCE LOCATORS TO WEB BROWSERS IN CELLULAR WIRELESS HANDSETS**
VERFAHREN, ZELLULARE DRAHTLOSE HANDAPPARATE UND SERVER ZUR BEREITSTELLUNG VON UNIVERSAL RESOURCE LOCATORS ZU WEB-BROWSERN IN ZELLULAREN DRAHTLOSEN HANDAPPARATEN
PROCÉDÉ, COMBINÉ CELLULAIRE SANS FIL ET SERVEUR POUR FOURNIR DES LOCALISATEURS DE RESSOURCES UNIVERSELS À DES NAVIGATEURS WEB DANS DES COMBINÉS CELLULAIRES SANS FIL

(30) Priority: 10.03.2008 US 45433
(43) Date of publication of application: 24.11.2010
(73) Proprietor: Sony Ericsson Mobile Communications AB, 221 88 Lund (SE)
(72) Inventor: BAARD, Henrik, SE-224 66 Lund (SE)
(74) Representative: Valea AB
(86) International application number: PCT/IB2008/053699
(87) International publication number: WO 2009/112899

(56) References cited:
- WO-A-99/35777
- US-A- 5 895 471
- US-A1- 2003 064 756
- US-A1- 2004 177 131

## Description

### BACKGROUND

The present invention generally relates to the field of communications, and more particularly, to mobile devices having access to the Internet.

It is known to use a cellular wireless handset to access the Internet using what is commonly referred to as a Web browser. For example, the handset may access the Internet using a Web browser to communicate with a server that can provide data to the browser in response to requests for web pages. It is known that the web pages can be uniquely identified on the Internet through use of a Uniform Resource Locator (URL). In operation, a user typically enters the URL of a desired web page into the browser address field, which sends a request for the web page to the server. In response, the server can forward the data associated with the web page to the browser for display by the handset.

US5895471 describes an invention where access to hypermedia servers connected to networks such as the Internet can be provided through mobile devices such as wireless telephones. Hypermedia links such as Uniform Resource Locators (URL) are used to identify and control access to resources on the network. These links are usually very long, are difficult to remember, and are difficult to enter into many mobile devices. These difficulties could be overcome by storing lists of frequently used links or "bookmarks" in the mobile device but limited memory in the device generally prevents this. This limitation is overcome by storing designated hypermedia links on a bookmark server. In one embodiment, the URL of the bookmark server is sent to the mobile device during initialization of the device. By allowing a user can to save, retrieve and maintain lists of frequently used links on the bookmark server, access to favorite resources on a network is greatly simplified.

US2003064756 describes a method of providing access to network addresses for use in a mobile telecommunications device allowing navigation between different addresses and displaying of information therefrom. The invention comprises compiling a first list of addresses bookmarked by a user and then compiling a second list of bookmarks selected on the basis of previous access by the user to said addresses via said first list. The second list may comprise the bookmarked addresses accessed most recently by the user, which will often be those most frequently used. However, the second list may instead comprise the addresses most frequently accessed by the user. The list may further contain entries corresponding to network addresses accessed by the user typing in the address. The provision of a second, selective list of addresses allows a user to access a favorite network address without scrolling through large numbers of bookmarks.

WO9935777 describes a system supporting uploading, downloading, collating and storage of bookmark addresses Universal Resource Locator codes - URLs using a remote Internet site. The system may be used in a web browser or in another type of application in combination with other functions, such as Email, word processing, spreadsheet, database, or operating system type functions, for example. A method for accessing Internet data using a remotely stored Internet address or bookmark such as an URL address code at a User site involves initiating Internet communication with a remote Internet site and receiving User identification information for obtaining access to a stored bookmark. At least one bookmark stored at the remote Internet site is selected and transfer of data is initiated from an Internet data source at the selected bookmark address.; The remote Internet site receives User identification information and bookmarks via Internet communication, stores the bookmarks in a file identifiable with the User Identification information and downloads the stored bookmarks in response to a request via Internet communication. Internet bookmark addresses are collated by identifying an allocated attribute that is characteristic of a category of bookmark addresses.

### SUMMARY

Embodiments according to the invention can provide methods, cellular wireless handsets, systems, and computer program products for providing universal resource locators to web browsers in cellular wireless handsets. Pursuant to these embodiments, a method of operating a cellular wireless handset can include pre-populating a Uniform Resource Locator (URL) bookmark file included in a cellular wireless handset file system of a cellular wireless handset with URL bookmark data provided from a URL bookmark server via a cellular wireless network.

Other systems, methods, and/or computer program products according to embodiments of the invention will be or become apparent to one with skill in the art upon review of the following drawings and detailed description. It is intended that all such additional systems, methods, and/or computer program products be included within this description, be within the scope of the present invention, and be protected by the accompanying claims.

### BRIEF DESCRIPTION OF THE DRAWINGS

Figure 1 is a schematic representation of a cellular wireless network providing service to cellular wireless handsets coupled to a URL bookmark server located on the Internet in some embodiments according to the invention.
Figure 2 is a schematic representation of cellular wireless handset configured to receive URL bookmark data from the URL bookmark server for pre-population of URL bookmark files in the cellular wireless handset in some embodiments according to the invention.
Figure 3 is a schematic representation of a cellular wireless handset operating within a cellular wireless network coupled to URL bookmark servers and secondary devices utilizing URL bookmark data in some embodiments according to the invention.
Figure 4 is a schematic representation of a cellular wireless handset configured to provide data from a pre-populated URL bookmark file in a file system of the cellular wireless handset to an address field of a web browser in some embodiments according to the invention.
Figure 5 is a flow chart that illustrates operations of a cellular wireless handset configured to receive URL bookmark data from a server for pre population of a URL bookmark file in the cellular wireless handset before instantiation of a cellular wireless handset web browser in some embodiments according to the invention.
Figure 6 is a schematic illustration of a URL bookmark server configured to provide URL bookmark data to cellular wireless handsets in some embodiments according to the invention.

### DESCRIPTION OF EMBODIMENTS ACCORDING TO THE INVENTION

The present invention now is described more fully hereinafter with reference to the accompanying figures, in which embodiments of the invention are shown. This invention may, however, be embodied in many alternate forms and should not be construed as limited to the embodiments set forth herein. Like numbers refer to like elements throughout the description of the figures.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein the term "and/or" includes any and all combinations of one or more of the associated listed items.

It will be understood that, when an element is referred to as being "coupled" to another element, it can be directly coupled to the other element or intervening elements may be present. In contrast, when an element is referred to as being "directly coupled" to another element, there are no intervening elements present.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and this specification and will not be interpreted in an idealized or overly formal sense expressly so defined herein.

The present invention is described below with reference to diagrams (such as schematic illustrations) and/or operational illustrations of methods, devices, and computer program products according to embodiments of the invention. It is to be understood that the functions/acts noted in the figures may occur out of the order noted in the operational illustrations. For example, two elements shown in succession may in fact be executed substantially concurrently or the elements may sometimes be executed in the reverse order, depending upon the functionality/acts involved.

The present invention may be embodied in hardware and/or in software (including firmware, resident software, micro-code, *etc.*). Furthermore, the present invention may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store, communicate, propagate, or transport the program for use by or in connection with the instruction execution system, apparatus, or device.

The computer-usable or computer-readable medium may be, for example but not limited to, an electronic, magnetic, optical, electromagnetic, infrared, or semiconductor system, apparatus, device, or propagation medium. More specific examples (a non-exhaustive list) of the computer-readable medium would include the following: an electrical connection having one or more wires, a portable computer diskette, a random access memory (RAM), a read-only memory (ROM), an erasable programmable read-only memory (EPROM or Flash memory), an optical fiber, and a portable compact disc read-only memory (CD-ROM).

Computer program code or "code" for carrying out operations according to the present invention may be written in an object oriented programming language such as JAVA®, Smalltalk or C++, JavaScript, Visual Basic, TSQL, Perl, or in various other programming languages. Software embodiments of the present invention do not depend on implementation with a particular programming language. Portions of the code may execute entirely on one or more systems utilized by an intermediary server.

The computer program code may be provided to a processor of a general-purpose computer, special purpose computer, or other programmable data processing apparatus as instructions to produce a machine, such that the instructions, which execute via the processor of the computer or other programmable data processing apparatus, create means for implementing the functions specified in the illustrations.

The computer code may be stored in a computer-readable memory that can direct a computer or other programmable data processing apparatus to function in a particular manner, such that the instructions stored in the computer-readable memory produce an article of manufacture including instruction means which implement the function specified in the illustrations.

As described hereinbelow in greater detail, Uniform Resource Locator (URL) bookmark data can be transferred from a URL bookmark server to a cellular wireless handset via a cellular wireless network to pre-populate a uniform resource locator bookmark file included in the handset before a cellular wireless handset browser is instantiated. For example, in some embodiments according to the invention, URL bookmark data can be transmitted from a URL bookmark server to
the cellular wireless handset for inclusion in a URL bookmark file (included in the cellular wireless handset file system) so that the URL bookmark data is available to the address field of the web browser to allow the user faster access to commonly used URLs.

In the following three paragraphs the invention will be exemplified in a way to understand the invention. In some embodiments according to the invention, the URL bookmark data provided by the server is synchronized with a second device including a separate browser that is used to access the Internet. In some embodiments according to the invention the URL bookmark data provided to the cellular wireless handset has not previously been entered into the browser of the handset. In other words, a user may access the Internet using a browser of a home PC or other system that is separate from the handset. The URL bookmark server may then synchronize the URL bookmarks utilized by the home PC with those used by the handset so that new URLs accessed via the home PC are pre-populated in the URL bookmark file of the handset without having been entered into the handset by the user.

In further embodiments according to the invention, the URL bookmark data may actually be provided to the URL bookmark server by a third party, such as a service provider that markets information to users of the cellular wireless handsets. In such embodiments according to the invention, the third party may determine that particular URL bookmarks may of be interest to users of the handsets and, therefore, push URL bookmark data to the URL bookmark server. Later, when URL bookmark data is transferred to the handset for pre-population of the URL bookmark data, new URL bookmark data from the third party can be included in the handset without any action being taken by the user. In still other embodiments according to the invention, the URL bookmark server can be any commonly available URL bookmarking service available on the Internet. In such an approach, the URL bookmark server may simply respond to requests from the cellular wireless handset for transfer of URL bookmark data to the handset before instantiation of the browser.

In some embodiments according to the invention, the URL bookmark data is transferred to the cellular wireless handset by the network before registration of the cellular wireless handset within the network is complete. For example, in some embodiments according to the invention, the URL bookmark data may be provided immediately after assignment of a control channel on which the cellular wireless handset is to camp. In still other embodiments according to the invention, once the cellular wireless handset has registered with the cellular wireless network, the URL bookmark data can be transferred to the handset via the network before instantiation of a web browser located therein to pre-populate the URL bookmark file. Then, the cellular wireless handset browser may be instantiated, which results in the data being pre-populated in URL bookmark file in the browser. Further, the URL bookmark data transferred to the handset can be provided by the URL bookmark server acting as a proxy for a second URL bookmark server that actually provides the URL bookmark data for transfer to the handset. In such an approach, the URL bookmark data provided by the second URL bookmark server may be in a first format that is foreign to the handset. Accordingly, the proxy server (or another server located within a chain of servers situated between the second URL bookmark server and the handset) can translate the format of the bookmark data provided by the second URL bookmark server to a format that is native to the handset so that the transfer of the URL bookmark data may occur. In some embodiments according to the invention, the native format associated with the handset can be an application-programming interface that is associated with the handset to which the transfer is to occur.

It will be understood that, as used herein, the term "handset" includes mobile electronic devices that are configured to be comfortably held in a typical user's hand while being used for, for example, mobile audio communications via a cellular wireless network with which the handset is registered for operation. In some embodiments according to the invention, the handset may be configured to communicate via a cellular wireless communication link that may include a protocol such as, for example, ANSI-136, Global Standard for Mobile (GSM) communication, General Packet Radio Service (GPRS), enhanced data rates for GSM evolution (EDGE), code division multiple access (CDMA), wideband-CDMA, CDMA2000, and UMTS. Communication protocols as used herein may specify the information communicated, the timing, the frequency, the modulation, and/or the operations for setting-up and/or maintaining a communication connection.

Embodiments may also be used in celestial communications systems, such as satellite communications systems. The celestial wireless communication system may be employed to perform similar functions to those performed by the wireless communications networks described herein. In particular, the celestial wireless communication system typically includes one or more satellites that serve as relays or transponders between one or more earth stations and (satellite) handsets. The satellites typically communicate with the satellite handsets and earth stations via duplex communication links. Each earth station may, in turn, be connected to a Public Switched Telephone Network, thereby allowing communications between the satellite handsets, and other terminals included in any other system with which the celestial wireless communication system is integrated. The celestial wireless communication system may utilize a single antenna beam covering the entire geographic region served by the system or the celestial wireless communication system may be designed such that it produces multiple overlapping or nonoverlapping beams that serve different sub-regions of the entire geographic region served by the celestial wireless communications system. The satellites and the respective sub-regions may serve a function similar to that of the base stations and the associated cells in a typical terrestrial wireless communications network.

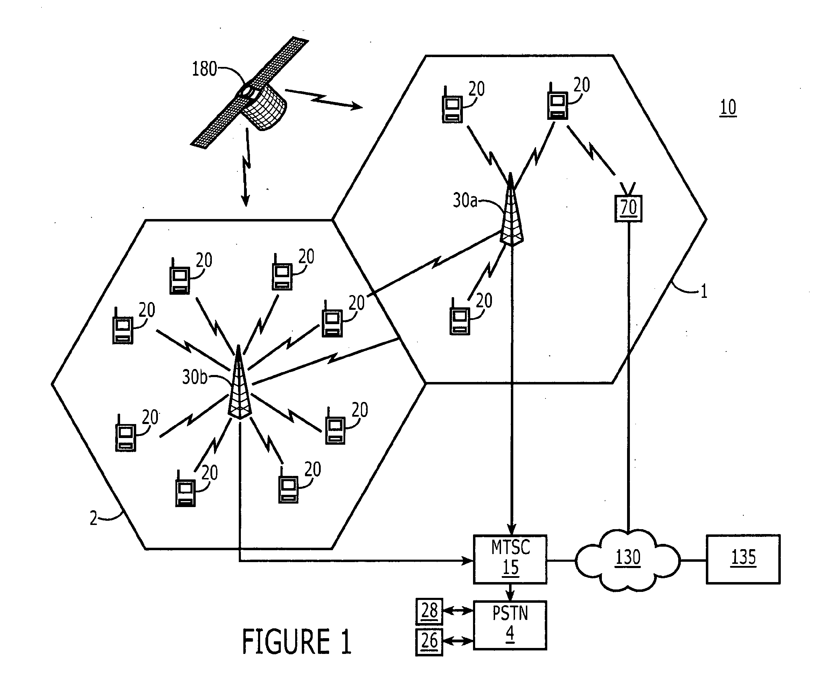

According to Figure 1, a plurality of handsets 20 can communicate with each other in a cellular wireless communications network (sometimes referred to herein as the "wireless network") 10 via a Mobile Telephone Switching Center (MTSC) 15. The handsets 20 can also communicate with other terminals, such as terminals 26, 28, via a Public Service Telephone Network (PSTN) 4 that is coupled to the wireless network 10.

The wireless network 10 is organized as cells 1-2 that collectively can provide service to a geographic region. In particular, each of the cells 1-2 can provide service to associated sub-regions included in the geographic region covered by the wireless network 10. More or fewer cells can be included in the wireless network 10, and the coverage area for some of the cells in the wireless network 10 may overlap one another. Base stations 30a-b in the cells 1-2 provide wireless communications between each other and the handsets 20 located in the geographic region of the cell to allow for communications between the handsets 20 and/or the terminals 26, 28 in the PSTN 4.

Each of the base stations 30a-b can transmit/receive data to/from the handsets 20 over an associated control channel. For example, the base station 30a can communicate with the handsets 20 located in cell 1 over associated control channels (not shown). The control channels can be used to page the handsets 20 in response to calls directed thereto or to transmit traffic channel assignments to the handsets 20 over which a call associated therewith is to be conducted. The control channels can be identified using control channel numbers or identifiers. For example, the handsets 20 can store a channel number that identifies the control channel on which it is currently camping.

The handsets 20 can be GPS enabled that can display navigational routes to users. In particular, the handsets 20 are capable of determining respective handset geographic location information that describes the geographic location of the handsets 20 using GPS signals provided by a Global Positioning System (GPS) 180. In some embodiments, the handsets 20 can use the GPS signals to determine their respective geographic locations. It will be understood that the single satellite shown in Figure 1 represents the GPS 180, which can include a constellation of GPS satellites. It will be understood that in some embodiments according to the invention, the handset geographic location can be determined based on other types of location systems such as GALILEO and GLONASS.

A Global Positioning Satellite (GPS) receiver typically performs an initialization process whereby the receiver determines its location based on a set of navigational parameters received from the GPS satellites. The duration of the initialization process may depend upon how much position information a GPS receiver has prior to initialization. For example, if a GPS receiver has some approximate location information for use during initialization, the time needed for initialization may be reduced compared to a situation where the GPS receiver does not have approximate location information.

A GPS receiver, included in the handset 20, can be provided with approximate location information (such as local time and position estimates, satellite ephemeris/clock/almanac information, and a visible satellite list) as a way to reduce the time needed for initialization. The approximate location information is provided by reference GPS receivers located at various nodes in a network in which the handset 20 operates. Such approaches are commonly referred to as assisted-GPS, which is defined, for example, in specification numbers 3GPP TS 04.31, 3GPP TS 03.71 and 3GPP TS 04.35.

Approximate location information can also be provided to the handset 20 as a location of a base station that provides service to the handset 20. In such systems, the locations of the base stations are known to the service provider, and may be made available to the handset 20 and/or to servers as approximate location information for the handset 20.

As shown in Figure 1, the handsets 20 can access a network 130 (such as the Internet) via the MTSC 15 or, alternatively via a local wireless network 70, such as an IEEE 802.11 network or ad hoc Bluetooth™ compliant network, that is coupled to the network 130. As used herein, an "ad hoc" protocol network or transmitter refers to one that is generally configured at the time of use based on the resources available. Such networks, typically, provide a service discovery protocol to allow, for example, identification of available resources. They may also negotiate various aspects of operations, such as peer relationships between resources, at the time of use of the resources.

As understood by those skilled in the art, Bluetooth™ is directed to providing a relatively robust high-speed wireless connection with low-power consumption and a low-cost architecture. Bluetooth™ technology may provide a universal radio interface in the 2.45 GHz frequency band to enable portable electronic devices to connect and communicate wirelessly via short-range ad hoc networks. Bluetooth™ technology is generally targeted towards the elimination of wires, cables, and connectors between such devices and systems as cordless or mobile phones, modems, headsets, personal digital assistants (PDAs), computers, printers, projectors, and local area networks. The Bluetooth™ interface is further described in an article authored by Jaap Haartsen entitled *Bluetooth--The universal radio interface for ad hoc, wireless connectivity.*

As further shown in Figure 1, the network 130 is coupled to a URL bookmark server 135 that is configured to store URL bookmark data that can be used by a browser to uniquely identify a web page on the Internet 130. It will be understood that the URL bookmark server 135 is configured to respond to requests to transfer URL bookmark data stored therein. Further, the URL bookmark server 135 can store different URL bookmark data for different handsets. For example, a first wireless handset may have first URL bookmark data associated therewith stored in the server 135, whereas a second handset can have a second set of URL bookmark data also stored by the same server 135. Accordingly, the URL bookmark server 135 is configured to transfer the requested URL bookmark data to the associated wireless handset operating within the cellular wireless network 10.

In the following paragraph the invention will be exemplified in a way to understand the invention. It will be understood that the URL bookmark server 135 can be in communication with other URL bookmark servers for which the URL bookmark server 135 can act as a proxy server. In such operations, URL bookmark data requested by a particular handset can actually be transferred from a URL bookmark server that is not directly connected to the Internet 130, but rather transfers the requested URL bookmark data to the server 135, which in turn forwards the requested URL bookmark data to the associated handset. Further, the URL bookmark server 135 can be configured to translate between different formats used to communicate the URL bookmark data between the servers. For example, in some embodiments according to the invention, a second URL bookmark server can transfer requested URL bookmark data in a format that is non-native to the handset that is to ultimately receive the URL bookmark data. Accordingly, the URL bookmark server 135 can be configured to translate the data from the non-native format utilized by the second URL bookmark server to a format that is native to the associated handset.

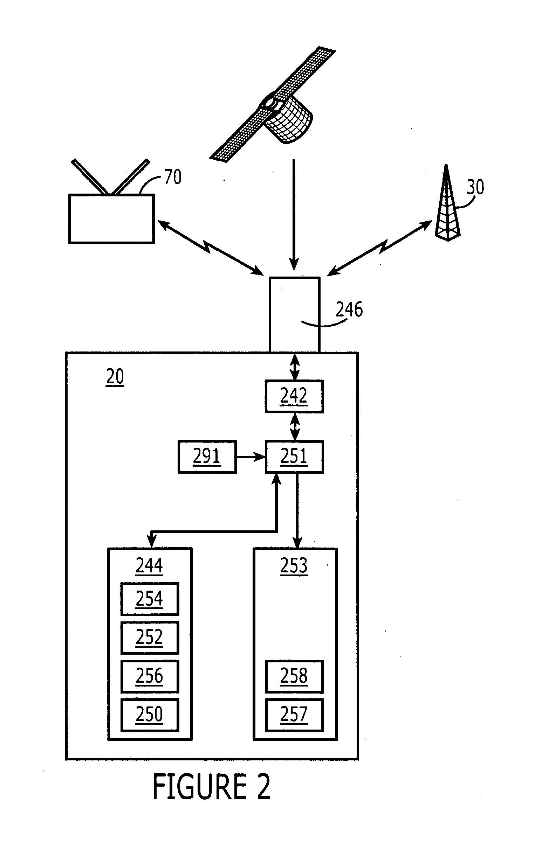

Figure 2 is a block diagram that illustrates embodiments of handsets 20 according to the invention. As illustrated in Figure 2, the handset 20 includes a transceiver circuit 242 that is operative to transmit and receive radio frequency communication signals to the wireless network 10 via an antenna system 246. The antenna system 246 may include an antenna feed structure and one or more antennas.

As is well known to those of skill in the art, a transmitter portion of the transceiver 242 converts the information, which is to be transmitted by the handset 20 into electromagnetic signals suitable for radio communications. A receiver portion of the transceiver 242 demodulates electromagnetic signals, which are received by the handset 20 from the wireless network 10 to provide the information contained in the signals in a format, which is understandable to the user.

A user interface 244 of the handset 20 may include a variety of components, such as a display 254, a keypad 252, a speaker 256, and a microphone 250, operations of which are known to those of skill in the art. It will be understood that the functions of keypad 252 and the display 254 can be provided by a touch screen through which the user can view information, such as computer displayable documents, provide input thereto, and otherwise control the handset 20. It will be understood by those skilled in the art that computer displayable documents (or Web pages) can be, for example, hypertext documents, which can include text, images, input fields, output fields, and a variety of other objects.

A geographic location circuit 291 can provide geographic location information to the handset 20 using the techniques described above in reference to, for example, assisted GPS, etc. The geographic location information can be stored in the handset 20 and/or transmitted to the wireless network 10 for operation of the bookmark server described herein.

A processor circuit 251 can provide for overall operation of the handset 20 including coordination of communications via the transceiver circuit 242, the user interface 244, and other components and systems included in the handset 20. For example, the processor circuit 251 can provide communications signals to the transceiver circuit 242 when the user speaks into the microphone 250 and receives communications signals from the transceiver 242 for the reproduction of audio through the speaker 256. The processor circuit 251 can generate characters for display on the display 254. For example, the processor circuit 251 can generate numbers for display when the user enters a telephone number on the keypad 252. The characters can also be generated by a character generator circuit, which is not shown.

Referring again to Figure 2, the processor circuit 251 may be implemented using a variety of hardware and software. For example, operations of the processor circuit 251 may be implemented using special-purpose hardware, such as an Application Specific Integrated Circuit (ASIC) and programmable logic devices such as gate arrays, and/or software or firmware running on a computing device such as a microprocessor, microcontroller or digital signal processor (DSP). The processor circuit 251 may provide digital signal processing operations such as scanning for an acceptable control channel, camping on a control channel (including maintaining synchronization with the base station that communicates with the handset 20), Voice Activated Dialing (VAD) services, and the like.

A memory 253 can store computer program instructions that, when executed by the processor circuit 251, carry out the operations described herein and shown in the figures. The memory 253 can be non-volatile memory, such as EEPROM (or flash memory), that retains the stored data while power is removed from the memory 253. In some embodiments according to the invention, the memory 253 stores computer program instructions that provide a web browser when instantiated through execution of the instructions by the processor circuit 251. As used herein, the term "instantiation" includes execution of computer program instructions so that a user may manually input data into the program. For example, as used herein, a web browser has been instantiated when a user of the browser is allowed to input a URL into an address field of the browser.

In some embodiments according to the invention, the web browser can be a HTTP compliant web browser. Web browsers have been promulgated on cellular phones to enable application programs to be written to operate on a wide array of wireless networks by providing a standard for the presentation and delivery of wireless information and telephony services. As a result, various handsets can utilize HTTP to enable delivery of relevant information and services.

Some examples of Web servers are International Business Machines Corporation's family of Lotus Domino® servers, the Apache server (available from www.apache.org), and Microsoft's Internet Information Server (IIS), available from Microsoft Corporation, Redmond, Washington.

A client (such as a web browser) can be a requesting program that can utilize HTTP access Web pages and files from Web servers. In operation, the Web server waits for a client to open a connection and to request the Web page. In response, the Web server sends a copy of the requested Web page to the client, closes the connection to the client, and waits for the next connection.

To ensure that clients and Web servers can interoperate, HTTP defines a format of requests (HTTP requests) sent from a client to a Web server and a format of responses (HTTP responses) that the Web server returns to the client. Examples of clients include browsers such as Netscape Navigator® (America Online, Inc., Dulles, VA) and Internet Explorer® (Microsoft Corporation, Redmond, WA). Browsers typically provide a graphical user interface for retrieving and viewing Web pages, applications, and other resources served by Web servers.

As is known to those skilled in this art, a Web page is conventionally formatted via a standard page description language such as HyperText Markup Language (HTML), which typically contains text and can reference graphics, sound, animation, and video data. HTML provides for basic document formatting and allows a Web content provider to specify anchors or hypertext links (typically manifested as highlighted text) to other servers. When a user selects (*i.e.,* activates) a particular hypertext link, a browser running on the user's client device reads and interprets an address, called a Uniform Resource Locator (URL) associated with the hypertext link, connects the browser with a Web server at that address, and makes a request (*e.g.,* an HTTP request) for the file identified in the hypertext link. The Web server then sends the requested file to the client which interprets and renders the Web page for display.

Although the present invention is described herein with reference to Web pages, Web servers, etc., it will be understood that the present invention can be practiced with any computer displayable documents having content, such as text. Furthermore, the present invention is not limited to the Web or even to displayable documents. For example, the present invention may be utilized for any networked content displayable or otherwise.

In operation, in order to receive information from sources on the Internet, a user typically inputs a URL into the address field of the browser on the client (on the handset). For example, in order to display a website associated with information relating to gas stations, a URL identifying the website is input to the client (on the handset). The client utilizes the URL to build a request in a binary format, and transmits the request to a gateway, which then decodes the binary request and builds a hypertext transfer protocol (HTTP) request, adding additional headers not included in the original request if needed. The HTTP request is then forwarded by the gateway to a server. Upon receiving the request, the server composes and transmits an HTTP response, which may include information requested by the user, which is forwarded to the handset via the gateway.

In some embodiments according to the invention, the memory 253 can store URL bookmark data 257 in a URL bookmark file 258 located within the file system of the handset 20. The URL bookmark data 257 can be transferred to the handset 20 from the URL bookmark server for pre-population before instantiation of a web browser that operates on the handset 20.

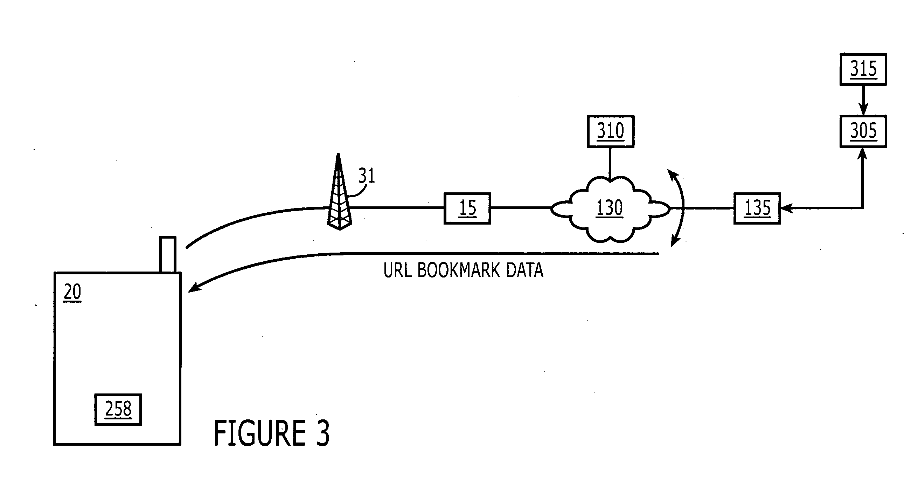

Figure 3 is a schematic illustration of URL bookmark servers transferring URL bookmark data to the handset 20 via the wireless network 10 in some embodiments according to the invention. In particular, before a web browser that operates on the handset 20 is instantiated to allow input to the address field by a user, the handset 20 requests URL bookmark data for transfer thereto via the wireless network 10. As described above, the wireless network includes (among other components) the base station 30 and the mobile telephone switching center 15 connected to the Internet 130. The URL bookmark server 135 is connected to the Internet 130 and further to second and third URL bookmark servers 305 and 315 respectively. The Internet 130 is also connected to a secondary device that can be used to enter URL bookmark data for use in access in the Internet 130.

In operation, the request for the transfer of URL bookmark data is relayed via the Internet 130 to the URL bookmark server 135, which in-turn transfers the requested URL bookmark data to the handset 20 for storage in the URL bookmark file 258 therein. Accordingly, when the web browser operating on the handset 20 is instantiated, the URL bookmark file 258, pre-populated with the URL bookmark data transferred from the server 135, is provided to the web browser so that the user may avoid entering URL bookmarks manually, but rather may simply select the URL bookmark data provided via the pre-populated bookmark file 258.

In the following three paragraphs the invention will be exemplified in a way to understand the invention. In some embodiments according to the invention as illustrated in Figure 3, the second and third servers 305 and 315 can actually provide the URL bookmark data requested by the handset 20. For example, the request from the handset 20 can be relayed from the server 135 to the second or third URL bookmark servers 305 and 315 so that the server 135 operates as a proxy server. Accordingly, the second or third URL bookmark server 305/315 can respond to the proxy request from the server 135 by transferring the requested URL bookmark data to the server 135 which can in-turn transfer the URL bookmark data to the handset 20 for pre-population of the URL bookmark file 258 as described above. It will be understood that the second and third URL bookmark servers 305 and 315 can be implemented and administered by third parties, who make URL bookmark data available to the bookmark server 135 based on marketing data. For example, the administrators of the second and third URL bookmark servers 305 and 315 can determine through market research that a user of the handset 20 may have an interest in the type of information available on a particular website with which the administrator of the URL bookmark service 305 and 315 has an existing relationship. Accordingly, the second and third URL bookmark servers 305 and 315 can be used to "push" or forward URL bookmarks to the server 135 for a transfer to the handset 20 to pre populate the URL bookmark file 258. In alternative embodiments according to the invention, rather than push the URL bookmark data to the server 135, the server 135 may simply request transfer from the second or third URL bookmark servers 305 and 315 for transfer to the handset 20.

In still other embodiments according to the invention, the second and third URL bookmark servers 305 and 315 can be bookmark services that can be utilized by the user accessed in the Internet via a different device. Accordingly, the server 135 can access the second and third URL bookmark servers 305 and 315 to transfer the URL bookmark data to/from the handset 20 for the purpose of synchronizing bookmark in both the handset 20 as well as those stored in the second and third URL bookmark servers 305 and 315.

In still further embodiments according to the invention, the device 310 can be a secondary device used to access the Internet 130, such as a home personal computer (PC). In such embodiments according to the invention, the bookmarks stored on the home PC 310 can be synchronized with those included in the URL bookmark file 258 stored in the handset 20. Accordingly, URL bookmark data stored in the handset 20 can be transferred to the home PC 310 via the Internet 130 and, further, URL bookmark data stored in the home PC 310 can be transferred to the handset 20 via the network 10 for pre population of the URL bookmark file 258 stored therein.

In other embodiments according to the invention, the URL bookmark data provided by the URL bookmark servers can be modified based on the geographic location information provided by the handset 20. For example, if the geographic location information indicates that the handset is being used in a European country, URL bookmark data associated with the country may be provided to the handset 20 (rather than the URL bookmark data that would otherwise be provided). In still other embodiments according to the invention, the URL bookmark data provided by the URL bookmark servers can be modified based on data that can otherwise indicate the location associated with the handset 20, such as a Mobile Country Code or other information used to register the handset 20 with the network 10.

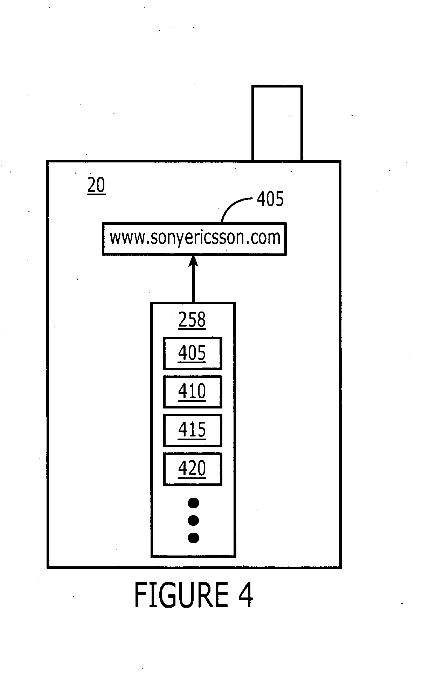

Figure 4 is a schematic illustration of a handset 20 accessing the URL bookmark file 258 storing pre populated URL bookmark data transferred from the URL bookmark server 135 and provided to an address field 405 shown on the display 254 of the handset 20. In particular, the pre populated URL bookmark file 258 can include URL bookmark data transferred from the server 135 via the Internet 130 as described above. Further, URL bookmark data 405, 410, 415, 420, etc. can be stored in the pre populated URL bookmark file 258 and provided to the address field 405 upon instantiation of the web browser. In particular, as shown in Figure 4, the URL bookmark data 405 included in the pre-populated URL bookmark file 258 can be provided to the address field 405 after instantiation of the web browser to display the exemplary URL world wide web address sonyericsson.com so as to avoid the user having to manually enter this URL. Accordingly, the user may more easily navigate to the website associated with the URL. Accordingly, in some embodiments according to the invention may provide both improved usability as well as improved performance.

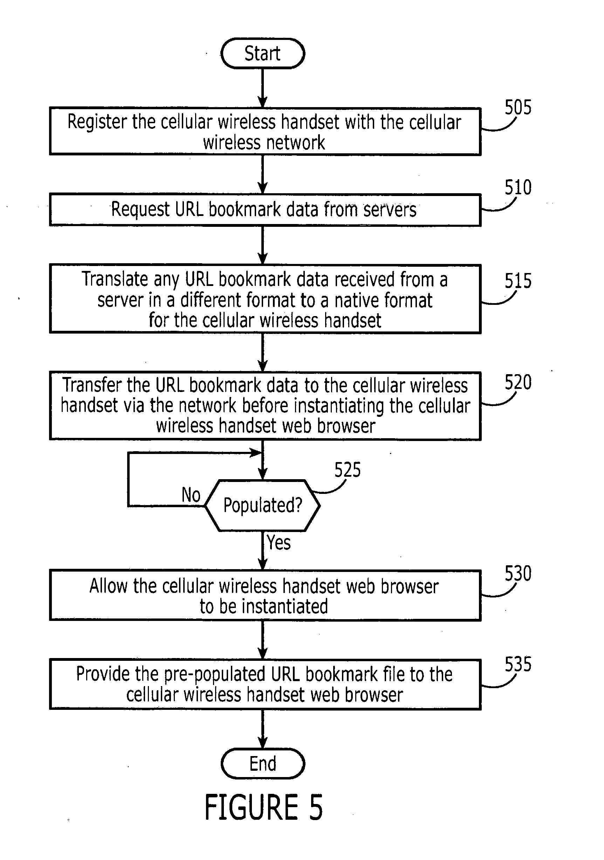

Figure 5 is a flowchart that illustrates operations of systems in some embodiments according to the invention. According to Figure 5, the cellular wireless handset registers with the cellular wireless network (Block 505). The handset 20 may forward geographic location information to the network 10 so that the URL bookmark server can modify or select the URL bookmark data based on the location of the handset 20. Alternatively, information used to register the handset 20 within the network 20 (or operate within the network 20) can provide the geographic location information. In still other embodiments according to the invention, base station location information (of a base station used to provide service to the handset 20) can be used to determine a location of the handset 20.

After registering with the cellular wireless network, the handset 20 can request URL bookmark data from one or more URL bookmark servers (Block 510). One of the URL bookmark servers may act as a proxy to receive other additional URL bookmark servers, which may transfer requested URL bookmark data in formats that are non native to the handset, which may therefore be translated to a native format by the proxy server or another server located on the Internet (Block 515).

The translated URL bookmark data is transferred to the cellular wireless handset via the network instantiating the cellular wireless handset web browser (Block 520). The transfer from the URL bookmark server is carried out until the URL bookmark file and the handset 20 is populated (Block 525), whereupon the cellular wireless handset allows instantiation of the cellular wireless handset web browser so that a user may otherwise access the address field of the web browser (Block 530). Once the web browser is instantiated (Block 530), the pre populated URL bookmark data stored in the URL bookmark file is provided to the web browser on the handset so that a user of the handset can simply select bookmarks for inclusion in the address field rather than entering those URL bookmarks manually (Block 535).

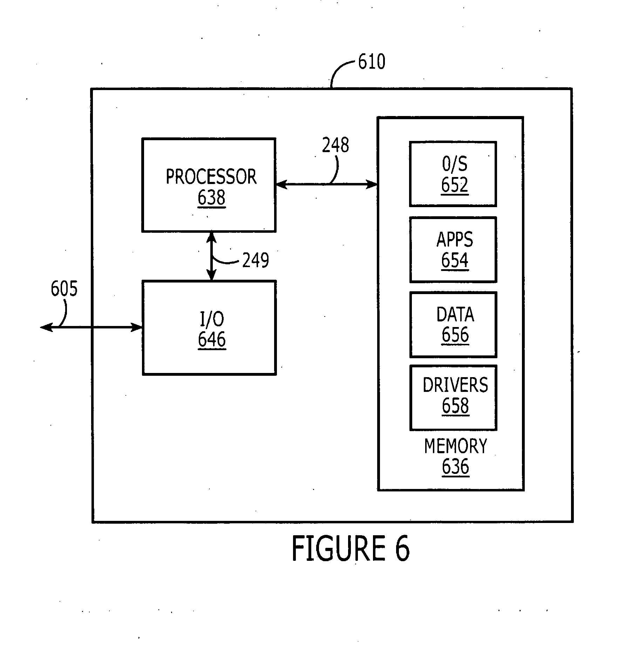

Figure 6 is a schematic illustration of an exemplary URL bookmark server 610 in some embodiments according to the invention. As illustrated, the URL bookmark server 610 includes a processor 638, a memory 636 and input/output (I/O) circuits 646. The URL bookmark server 610 may be incorporated in, for example, a general-purpose computer, server, or the like. The processor 638 communicates with the memory 636 via an address/data bus 648 and communicates with the input/output circuits 646 via an address/data bus 649.

The URL bookmark server 610 is coupled to a network 605 through the input/output circuits 646 using, for example, an Internet Protocol (IP) connection to receive messages and communications, which may include TCP/IP type communications, over the Internet 130.

The components in the URL bookmark server 610 may be known components such as those used in many data processing systems, which may be configured to operate as described herein. In particular, the processor 638 can be any commercially available or custom microprocessor, microcontroller, digital signal processor or the like. The memory 636 may include any memory devices containing the software and data used to implement the functionality circuits or modules used in accordance with embodiments described herein. The memory 636 can include, but is not limited to, the following types of devices: cache, ROM, PROM, EPROM, EEPROM, flash memory, SRAM, DRAM and/or magnetic disk.

As further illustrated in Figure 6, the memory 636 may include several categories of software to provide operation of the server 610: an operating system 652; application programs 654 including the software to provide the operations of the URL bookmark server 610 described herein, translation between different message formats (such as those used by different server to transmit URL bookmark data to a proxy server used to forward the received URL bookmark data to the handset), input/output device drivers 658; and data 656. In some embodiments, the applications software 654 can convert messages to/from various formats so that the URL bookmark data received from a first server can be translated to a format that is "native" to the handset, which can then be forwarded.

The data 656 represents the static and dynamic data used by the application programs 654, the operating system 652, and the input/output device drivers 658 that may reside in the memory 636. The data 56 can include the different URL bookmark data that is to be transferred to different handsets via the wireless network for pre-population before instantiation of the respective browsers.

As will be appreciated by those of skill in the art, the operating system 652 may be any operating system suitable for use with a data processing system, such as OS/2, AIX or zOS from International Business Machines Corporation, Armonk, NY, Windows 95, Windows98, Windows2000 or WindowsXP from Microsoft Corporation, Redmond, WA, Unix or Linux.

The input/output device drivers 658 typically include software routines accessed through the operating system 652 by the application programs 654 to communicate with devices such as the input/output circuits 646 and the memory 636.

As described above, Uniform Resource Locator (URL) bookmark data can be transferred from a URL bookmark server to a cellular wireless handset via a cellular wireless network to pre-populate a uniform resource locator bookmark file included in the handset before a cellular wireless handset browser is instantiated. For example, in some embodiments according to the invention, URL bookmark data can be transmitted from a URL bookmark server to the cellular wireless handset for inclusion in a URL bookmark file (included in the cellular wireless handset file system) so that the URL bookmark data is available to the address field of the web browser to allow the user faster access to commonly used URLs.

In the drawings and specification, there have been disclosed embodiments of the invention and, although specific terms are employed, they are used in a generic and descriptive sense only and not for purposes of limitation, the scope of the invention being set forth in the following claims.

## Claims

1. A method of operating a cellular wireless handset (20) comprising:
pre-populating a Uniform Resource Locator, URL, bookmark file included in a cellular wireless handset file system of a cellular wireless handset (20) with URL bookmark data (257) provided from a URL bookmark server via a cellular wireless network (10), wherein the URL bookmark server comprises a URL bookmark server configured to synchronize first URL bookmark data utilized by a web browser on the cellular wireless handset (20) with second URL bookmark data utilized by a second device;
**characterized by**
transferring the URL bookmark data (257) to the cellular wireless handset (20) via the network (10) before completing registration of the cellular wireless handset (20) with the cellular wireless network (10).

2. A method according to claim 1, wherein the URL bookmark data (257) used to pre-populate the URL bookmark file (258) includes the second URL bookmark data utilized by the second device previously un-entered into the web browser prior to pre-populating the URL bookmark file (258) with first and second URL bookmark data.

3. A method according to claim 1, wherein the URL bookmark data (257) used to pre-populate the URL bookmark file (258) includes the second URL bookmark data provided by a third party previously un-entered into the web browser prior to pre-populating the URL bookmark file (258) with first and second URL bookmark data.

4. A method according to any of the claims 1-3, wherein pre-populating a Uniform Resource Locator, URL, bookmark file further comprises:
registering the cellular wireless handset (20) with the cellular wireless network (10);
transferring the URL bookmark data (257) to the cellular wireless handset (20) via the network (10) before instantiating a cellular wireless handset (20) web browser to pre-populate the URL bookmark file (258); and then
instantiating the cellular wireless handset (20) web browser; and
providing the pre-populated URL bookmark file (258) to the cellular wireless handset (20) web browser.

5. A method according to claim 4, wherein the URL bookmark server comprises a first URL bookmark server (135) and wherein transferring the URL bookmark data (257) to the cellular wireless handset (20) via the network (10) further comprises:
requesting the URL bookmark data (257) from a second URL bookmark server (305) via the first URL bookmark server (135).

6. A method according to claim 5, further comprising:
receiving a response, including the URL bookmark data (257), from the second URL bookmark server (305) in a first format;
translating the response to a second format comprising a native format for the cellular wireless handset (20); and
transmitting the URL bookmark data (257) from the first URL bookmark server (135) to the cellular wireless handset (20) in native format.

7. A method according to claim 6, wherein the native format comprises an application-programming interface associated with the cellular wireless handset (20).

8. A method according to any of the claims 4-7, further comprising:
determining geographic location information associated with the cellular wireless handset 20; and
selecting the URL bookmark data (257) transferred to the cellular wireless handset (20) based on the geographic location information associated with the cellular wireless handset (20).

9. A method according to claim 8, wherein determining comprises:
determining geographic location information associated with the cellular wireless handset (20) based on GPS (180) information provided by the cellular wireless handset (20) or based on registration or operating information associated with the cellular wireless handset (20) maintained by the cellular wireless network (10), or based on a location of a base station (30) used to provide service to the handset (20).

10. A cellular wireless handset (20) comprising:
a transceiver circuit (242) configured to transmit/receive data to/from a cellular wireless network (10) in which the cellular wireless handset (20) is registered for service;
a processor circuit (251), coupled to the transceiver circuit (242), the processor circuit (251) configured to coordinate operations of the cellular wireless handset (20) in communicating with the cellular wireless network (10);
a memory circuit (253), coupled to the processor circuit (251), the memory circuit (253) configured to store pre-populated URL bookmark data (257) received form the cellular wireless network (10);
**characterized in that**
the processor circuit (251) is configured to request the URL bookmark data (257) before completing registration of the cellular wireless handset (20) with the cellular wireless network (10).

11. A cellular wireless handset (20) according to claim 10, wherein the processor circuit (251) is configured to receive the URL bookmark data (257) for storage in the memory circuit (253) before instantiating a cellular wireless handset (20) web browser to pre-populate a URL bookmark file (258) within the cellular wireless handset (20) file system.

12. A cellular wireless server for operating a URL bookmark service comprising:
a processor circuit (251), configured to receive requests for pre-populated Uniform Resource Locator, URL, bookmark data prior to instantiation of a web browser operating on a cellular wireless handset (20);
a memory circuit (253), coupled to the processor circuit (251), the memory circuit (253) configured to store the URL bookmark data (257) to be pre-populated in cellular wireless handset (20);
**characterized in that**
the processor circuit (251) is configured to synchronize first URL bookmark data utilized by the web browser on the cellular wireless handset (20) with second URL bookmark data utilized by a second device and transferring the URL bookmark data (257) to the cellular wireless handset (20) via the network (10) before completing registration of the cellular wireless handset (20) with the cellular wireless network (10).

## Patentansprüche

1. Verfahren zum Betreiben eines zellulären drahtlosen Handapparats (20), umfassend:
Vorbestücken einer Uniform-Resource-Locator-, URL-, Lesezeichendatei, die in einem Dateisystem für zelluläre drahtlose Handapparate eines zellulären drahtlosen Handapparats (20) enthalten ist, mit URL-Lesezeichendaten (257), die von einem URL-Lesezeichen-Server über ein zelluläres drahtloses Netzwerk (10) bereitgestellt werden, wobei der URL-Lesezeichen-Server einen URL-Lesezeichen-Server umfasst, der dafür konfiguriert ist, erste URL-Lesezeichendaten, die von einem Web-Browser auf dem zellulären drahtlosen Handapparat (20) verwendet werden, mit zweiten URL-Lesezeichendaten zu synchronisieren, die von einer zweiten Vorrichtung verwendet werden;
**gekennzeichnet durch**
Übermitteln der URL-Lesezeichendaten (257) über das Netzwerk (10) an den zellulären drahtlosen Handapparat (20) vor Beendigung der Registrierung des zellulären drahtlosen Handapparats (20) in dem zellulären drahtlosen Netzwerk (10).

2. Verfahren nach Anspruch 1, wobei die URL-Lesezeichendaten (257), die verwendet werden, um die URL-Lesezeichendatei (258) vorzubestücken, die von der zweiten Vorrichtung verwendeten zweiten URL-Lesezeichendaten umfassen, die nicht zuvor vor dem Vorbestücken der URL-Lesezeichendatei (258) mit ersten und zweiten URL-Lesezeichendaten in den Web-Browser eingegeben wurden.

3. Verfahren nach Anspruch 1, wobei die URL-Lesezeichendaten (257), die verwendet werden, um die URL-Lesezeichendatei (258) vorzubestücken, die von einer dritten Partei bereitgestellten zweiten URL-Lesezeichendaten umfassen, die nicht zuvor vor dem Vorbestücken der URL-Lesezeichendatei (258) mit ersten und zweiten URL-Lesezeichendaten in den Web-Browser eingegeben wurden.

4. Verfahren nach einem der Ansprüche 1 bis 3, wobei das Vorbestücken einer Uniform-Resource-Locator-, URL-, Lesezeichendatei ferner Folgendes umfasst:
Registrieren des zellulären drahtlosen Handapparats (20) in dem zellulären drahtlosen Netzwerk (10);
Übermitteln der URL-Lesezeichendaten (257) über das Netzwerk (10) an den zellulären drahtlosen Handapparat (20) vor dem Instanzieren eines Web-Browsers eines zellulären drahtlosen Handapparats (20), um die URL-Lesezeichendatei (258) vorzubestücken, und dann
Instanzieren des Web-Browsers des zellulären drahtlosen Handapparats (20) und
Bereitstellen der vorbestückten URL-Lesezeichendatei (258) dem Web-Browser des zellulären drahtlosen Handapparats (20).

5. Verfahren nach Anspruch 4, wobei der URL-Lesezeichen-Server einen ersten URL-Lesezeichen-Server (135) umfasst und wobei das Übermitteln der URL-Lesezeichendaten (257) über das Netzwerk (10) an den zellulären drahtlosen Handapparat (20) ferner Folgendes umfasst:
Anfordern der URL-Lesezeichendaten (257) von einem zweiten URL-Lesezeichen-Server (305) über den ersten URL-Lesezeichen-Server (135).

6. Verfahren nach Anspruch 5, ferner umfassend:
Empfangen einer Antwort, welche die URL-Lesezeichendaten (257) umfasst, von dem zweiten URL-Lesezeichen-Server (305) in einem ersten Format;
Umwandeln der Antwort in ein zweites Format, welches ein systemspezifisches Format für den zellulären drahtlosen Handapparat (20) umfasst; und
Senden der URL-Lesezeichendaten (257) von dem ersten URL-Lesezeichen-Server (135) an den zellulären drahtlosen Handapparat (20) im systemspezifischen Format.

7. Verfahren nach Anspruch 6, wobei das systemspezifische Format eine Anwendungs-Programmierungs-Schnittstelle umfasst, die zu dem zellulären drahtlosen Handapparat (20) gehört.

8. Verfahren nach einem der Ansprüche 4 bis 7, ferner umfassend:
Bestimmen geographischer Positionsinformationen, die zu dem zellulären drahtlosen Handapparat (20) gehören; und
Auswählen der URL-Lesezeichendaten (257), die an den zellulären drahtlosen Handapparat (20) übermittelt werden, auf der Grundlage der geographischen Positionsinformationen, die zu dem zellulären drahtlosen Handapparat (20) gehören.

9. Verfahren nach Anspruch 8, wobei das Bestimmen Folgendes umfasst:
Bestimmen geographischer Positionsinformationen, die zu dem zellulären drahtlosen Handapparat (20) gehören, auf der Grundlage von GPS-Informationen (180), die von dem zellulären drahtlosen Handapparat (20) bereitgestellt werden, oder auf der Grundlage von Registrierungs- oder Betriebsinformationen, die zu dem zellulären drahtlosen Handapparat (20) gehören und von dem zellulären drahtlosen Netzwerk (10) unterhalten werden, oder auf der Grundlage einer Position einer Basisstation (30), die verwendet wird, um dem Handapparat (20) einen Dienst bereitzustellen.

10. Zellulärer drahtloser Handapparat (20), umfassend:
Eine Sender/Empfänger-Schaltung (242), welche dafür konfiguriert ist, Daten an ein zelluläres drahtloses Netzwerk (10) zu senden/von einem zellulären drahtlosen Netzwerk (10) zu empfangen, in welchem der zelluläre drahtlose Handapparat (20) für einen Dienst registriert ist;
eine Prozessorschaltung (251), welche mit der Sender/Empfänger-Schaltung (242) verbunden ist, wobei die Prozessorschaltung (251) dafür konfiguriert ist, Operationen des zellulären drahtlosen Handapparats (20) beim Kommunizieren mit dem zellulären drahtlosen Netzwerk (10) zu koordinieren;
eine Speicherschaltung (253), welche mit der Prozessorschaltung (251) verbunden ist, wobei die Speicherschaltung (253) dafür konfiguriert ist, vorbestückte URL-Lesezeichendaten (257) zu speichern, die von dem zellulären drahtlosen Netzwerk (10) empfangen werden;
**dadurch gekennzeichnet, dass**
die Prozessorschaltung (251) dafür konfiguriert ist, die URL-Lesezeichendaten (257) vor Beendigung der Registrierung des zellulären drahtlosen Handapparats (20) in dem zellulären drahtlosen Netzwerk (10) anzufordern.

11. Zellulärer drahtloser Handapparat (20) nach Anspruch 10, wobei die Prozessorschaltung (251) dafür konfiguriert ist, die URL-Lesezeichendaten (257) zur Speicherung in der Speicherschaltung (253) zu empfangen, bevor ein Web-Browser eines zellulären drahtlosen Handapparats (20) instanziert wird, um eine URL-Lesezeichendatei (258) innerhalb des Dateisystems des zellulären drahtlosen Handapparats (20) vorzubestücken.

12. Zellulärer drahtloser Server zum Betreiben eines URL-Lesezeichendienstes, umfassend:
eine Prozessorschaltung (251), welche dafür konfiguriert ist, vor dem Instanzieren eines Web-Browsers, der auf einem zellulären drahtlosen Handapparat (20) betrieben wird, Anforderungen von vorbestückten Uniform-Resource-Locator-, URL-, Lesezeichendaten zu empfangen;
eine Speicherschaltung (253), welche mit der Prozessorschaltung (251) verbunden ist, wobei die Speicherschaltung (253) dafür konfiguriert ist" die URL-Lesezeichendaten (257) zu speichern, die in einem zellulären drahtlosen Handapparat (20) vorzubestücken sind;
**dadurch gekennzeichnet, dass**
die Prozessorschaltung (251) dafür konfiguriert ist, erste URL-Lesezeichendaten, die von dem Web-Browser auf dem zellulären drahtlosen Handapparat (20) verwendet werden, mit zweiten URL-Lesezeichendaten zu synchronisieren, die von einer zweiten Vorrichtung verwendet werden, und die URL-Lesezeichendaten (257) vor Beendigung der Registrierung des zellulären drahtlosen Handapparats (20) in dem zellulären drahtlosen Netzwerk (10) über das Netzwerk (10) an den zellulären drahtlosen Handapparat (20) zu übermitteln.

## Revendications

1. Procédé d'exploitation d'un combiné sans fil cellulaire (20) comprenant :
le pré-peuplement d'un fichier de signet de localisateur de ressource uniforme, URL pour Uniform Resource Locator, inclus dans un système de fichier de combiné sans fil cellulaire d'un combiné sans fil cellulaire (20) avec des données de signet URL (257) fournies à partir d'un serveur de signet URL via un réseau sans fil cellulaire (10), dans lequel le serveur de signet URL comprend un serveur de signet URL configuré pour synchroniser des premières données de signet URL utilisées par un navigateur Web sur le combiné sans fil cellulaire (20) avec des secondes données de signet URL utilisées par un second dispositif ;
**caractérisé par**
le transfert des données de signet URL (257) au combiné sans fil cellulaire (20) via le réseau (10) avant l'achèvement de l'enregistrement du combiné sans fil cellulaire (20) auprès du réseau sans fil cellulaire (10).

2. Procédé selon la revendication 1, dans lequel les données de signet URL (257) utilisées pour pré-peupler le fichier de signet URL (258) incluent les secondes données de signet URL utilisées par le second dispositif précédemment non entré dans le navigateur Web avant le pré-peuplement du fichier de signet URL (258) avec des premières et secondes données de signet URL.

3. Procédé selon la revendication 1, dans lequel les données de signet URL (257) utilisées pour pré-peupler le fichier de signet URL (258) incluent les secondes données de signet URL fournies par un tiers précédemment non entré dans le navigateur Web avant le pré-peuplement du fichier de signet URL (258) avec des premières et secondes données de signet URL.

4. Procédé selon l'une quelconque des revendications 1 à 3, dans lequel le pré-peuplement d'un fichier de signet de localisateur de ressource uniforme, URL, comprend en outre :
l'enregistrement du combiné sans fil cellulaire (20) auprès du réseau sans fil cellulaire (10) ;
le transfert des données de signet URL (257) au combiné sans fil cellulaire (20) via le réseau (10) avant l'instanciation d'un navigateur Web de combiné sans fil cellulaire (20) pour pré-peupler le fichier de signet URL (258) ; et ensuite
l'instanciation du navigateur Web de combiné sans fil cellulaire (20) ; et
la fourniture du fichier de signet URL (258) pré-peuplé au navigateur Web de combiné sans fil cellulaire (20) .

5. Procédé selon la revendication 4, dans lequel le serveur de signet URL comprend un premier serveur de signet URL (135) et dans lequel le transfert des données de signet URL (257) au combiné sans fil cellulaire (20) via le réseau (10) comprend en outre :
la demande des données de signet URL (257) à un second serveur de signet URL (305) via le premier serveur de signet URL (135).

6. Procédé selon la revendication 5, comprenant en outre :
la réception d'une réponse, incluant les données de signet URL(257), en provenance du second serveur de signet URL (305) dans un premier format ;
la traduction de la réponse en un second format comprenant un format natif pour le combiné sans fil cellulaire (20) ; et
la transmission des données de signet URL (257) du premier serveur de signet URL (135) au combiné sans fil cellulaire (20) au format natif.

7. Procédé selon la revendication 6, dans lequel le format natif comprend une interface de programmation d'application associée au combiné sans fil cellulaire (20).

8. Procédé selon l'une quelconque des revendications 4 à 7, comprenant en outre :
la détermination d'informations de localisation géographique associées au combiné sans fil cellulaire (20) ; et
la sélection des données de signet URL (257) transférées au combiné sans fil cellulaire (20) sur la base des informations de localisation géographique associées au combiné sans fil cellulaire (20).

9. Procédé selon la revendication 8, dans lequel la détermination comprend :
la détermination d'informations de localisation géographique associées au combiné sans fil cellulaire (20) sur la base d'informations GPS (180) fournies par le combiné sans fil cellulaire (20) ou sur la base d'informations d'enregistrement ou d'exploitation associées au combiné sans fil cellulaire (20) maintenu par le réseau sans fil cellulaire (10), ou sur la base d'une localisation d'une station de base (30) utilisée pour fournir un service au combiné (20).

10. Combiné sans fil cellulaire (20) comprenant :
un circuit d'émetteur-récepteur (242) configuré pour transmettre/recevoir des données à/d'un réseau sans fil cellulaire (10) dans lequel le combiné sans fil cellulaire (20) est enregistré pour le service ;
un circuit de processeur (251), couplé au circuit d'émetteur-récepteur (242), le circuit de processeur (251) configuré pour coordonner des opérations du combiné sans fil cellulaire (20) en communication avec le réseau sans fil cellulaire (10) ;
un circuit de mémoire (253), couplé au circuit de processeur (251), le circuit de mémoire (253) configuré pour stocker des données de signet URL (257) pré-peuplées reçues du réseau sans fil cellulaire (10) ;
**caractérisé en ce que**
le circuit de processeur (251) est configuré pour demander les données de signet URL (257) avant l'achèvement de l'enregistrement du combiné sans fil cellulaire (20) auprès du réseau sans fil cellulaire (10).

11. Combiné sans fil cellulaire (20) selon la revendication 10, dans lequel le circuit de processeur (251) est configuré pour recevoir les données de signet URL (257) pour le stockage dans le circuit de mémoire (253) avant l'instanciation d'un navigateur Web de combiné sans fil cellulaire (20) pour pré-peupler un fichier de signet URL (258) à l'intérieur du système de fichier de combiné sans fil cellulaire (20).

12. Serveur sans fil cellulaire pour exploiter un service de signet URL comprenant :
un circuit de processeur (251), configuré pour recevoir des demandes de données de signet de localisateur de ressource uniforme, URL, pré-peuplées avant l'instanciation d'un navigateur Web fonctionnant sur un combiné sans fil cellulaire (20) ;
un circuit de mémoire (253), couplé au circuit de processeur (251), le circuit de mémoire (253) configuré pour stocker les données de signet URL (257) devant être pré-peuplées dans le combiné sans fil cellulaire (20) ;
**caractérisé en ce que**
le circuit de processeur (251) est configuré pour synchroniser des premières données de signet URL utilisées par le navigateur Web sur le combiné sans fil cellulaire (20) avec des secondes données de signet URL utilisées par un second dispositif et transférant les données de signet URL (257) au combiné sans fil cellulaire (20) via le réseau (10) avant l'achèvement de l'enregistrement du combiné sans fil cellulaire (20) auprès du réseau sans fil cellulaire (10).
